# EUROPÄISCHE PATENTSCHRIFT

(11) **EP 0 799 441 B1**
(45) Veröffentlichungstag und Bekanntmachung des Hinweises auf die Patenterteilung: **24.03.1999**
(21) Anmeldenummer: 95936982.8
(22) Anmeldetag: 25.11.1995
(51) Int. Cl.: G05B 19/042

(54) **VERFAHREN ZUR STEUERUNG VON TECHNISCHEN VORGÄNGEN**
SYSTEM FOR CONTROLLING TECHNICAL PROCESSES
PROCEDE DE COMMANDE DE PROCESSUS TECHNIQUES

(30) Priorität: 21.12.1994 DE 4445651
(43) Veröffentlichungstag der Anmeldung: 08.10.1997
(73) Patentinhaber: ROBERT BOSCH GMBH, 70442 Stuttgart (DE)
(72) Erfinder: POLEDNA, Stefan, A-1020 Wien (AT)
(86) Internationale Anmeldenummer: DE9501665
(87) Internationale Veröffentlichungsnummer: WO9619759

(56) Entgegenhaltungen:
- EP-A- 0 362 971
- GB-A- 2 119 124
- PATENT ABSTRACTS OF JAPAN vol. 017 no. 116 (P-1499) ,10.März 1993 & JP,A,04 302026 (MAZDA MOTOR CORP) 26.Oktober 1992,

## Beschreibung

### Stand der Technik

Die Erfindung geht aus von einem Verfahren nach der Gattung des Hauptanspruchs. In modernen Steuergeräten sind Mikrorechner eingesetzt, die oft so leistungsfähig sind, daß sie mehrere Aufgaben parallel bearbeiten können. Diese Fähigkeit wird insbesondere bei Anlagen zur Prozeßsteuerung genutzt, bei denen ein einzelner Rechner mehrere Regel- und Steueraufgaben gleichzeitig erfüllt. Insbesondere im Kraftfahrzeugbereich sind häufig Steuergeräte eingesetzt, die sehr komplexe Steueraufgaben zu erfüllen haben. Als Beispiele hierfür werden Motorsteuergeräte, Getriebesteuergeräte, usw. genannt. Um die quasi-gleichzeitige Abarbeitung auf einem Rechner zu erzielen, werden Verfahren verwendet, die zwischen den einzelnen Aufgaben umschalten. Hierzu wird typischerweise ein Betriebssystem in den entsprechenden Steuergeräten eingesetzt.

Es ist schon ein gattungsgemäßes Verfahren aus dem Artikel von Bernd Ackermann, Anforderungen an ein Echtzeit-Betriebsystem für "eingebettete Systeme", Elektronik, Nr. 18, 1992, Seiten 120 bis 128 bekannt. Darin werden wichtige Merkmale von Echtzeit-Betriebssystemen für Mikrorechner enthaltende Steuergeräte erläutert. Für die Ablaufsteuerung, d.h. für die Koordination der einzelnen Aufgabenprogramme ist ein als Prozeßmanager bezeichnetes Programm verantwortlich. Dieses steuert die Vergabe der CPU und koordiniert alle ablaufenden Aufgabenprogramme (Tasks). Der Prozessmanager erlaubt die quasi-parallele Abarbeitung mehrerer Aufgabenprogramme, was auch als Multitasking bezeichnet wird. Der in dem Bericht beschriebene Prozeßmanager ist so ausgelegt, daß er ein gerade abgearbeitetes Programm jederzeit unterbrechen kann um ein Aufgabenprogramm, das für die Arbeit des gesamten Systems momentan wichtiger (höher prior) ist, zu starten. Das unterbrochene Programm wird an der unterbrochnenen Stelle fortgesetzt, wenn die Abarbeitung des höher prioren Programms beendet ist. Die Vorgehensweise, daß ein gerade in Abarbeitung befindliches Aufgabenprogramm jederzeit unterbrochen werden kann, wird auch als preemptives scheduling oder preemptives multitasking bezeichnet.

Daneben ist in der Literatur auch ein kooperatives scheduling oder kooperatives multitasking bekannt. Bei dieser Art der Ablaufsteuerung ist die Umschaltung zwischen verschiedenen Aufgabenprogrammen nur an zuvor im Programm festgelegten Umschaltpunkten möglich. Ein Aufgabenprogramm kann dabei also nicht jederzeit unterbrochen werden.

Zwischen den gleichzeitig ablaufenden Programmen ist im allgemeinen ein Datenaustausch notwendig. Beispielsweise werden gemessene Eingangsgrößen oder Regelabweichungen anderen Aufgabenprogrammen mitgeteilt. Üblicherweise erfolgt der Datenaustausch zwischen den einzelnen Aufgabenprogrammen über gemeinsame Speicherbereiche, auch globale Variablen genannt. Wird für die Umschaltung zwischen den Aufgabenprogammen eine preemptive Umschaltstrategie gewählt, so tritt beim Datenaustausch über gemeinsame Speicherbereiche das folgende Problem auf:

Wenn das Aufgabenprogramm an mehreren Stellen auf die globale Variable zugreift, so kann die globale Variable an den unterschiedlichen Zugriffsstellen unterschiedliche Werte annehmen, wenn nämlich ein höher priores Aufgabenprogramm das erste Programm unterbricht und während seiner Abarbeitung den Wert der globalen Variablen verändert. Die Folge davon ist, daß sich die Eingangsgrößen eines Programms während der Abarbeitung ändern können. Dies kann fehlerhafte Programmabläufe zur Folge haben. Das Problem wird Dateninkonsistenz genannt. Ändern sich hingegen die Eingangsgrößen für ein Aufgabenprogramm während der gesamten Bearbeitungsdauer nicht, dann liegt Datenkonsistenz vor.

### Vorteile der Erfindung

Das erfindungsgemäße Verfahren mit den kennzeichnenden Merkmalen des Hauptanspruchs hat demgegenüber den Vorteil, daß Datenkonsistenz bei einem komplexen Steuerprogramm, bei dem mehrere Aufgabenprogramme sich gegenseitig unterbrechen können auf einfache Weise garantiert ist. Durch das Sicherstellen der Datenkonsistenz verhalten sich die Aufgabenprogramme so, als ob sie sequentiell abgearbeitet würden. Die Programme können daher unabhängig davon entwickelt werden, ob die preemptive oder kooperative Umschaltstrategie für die Umschaltung zwischen den Aufgabenprogrammen gewählt wird. Dies bietet wiederum Vorteile bei der Entwicklung von Steuerprogrammen, insbesondere bei der Portierung von Steuerprogrammen zwischen unterschiedlichen Systemen. Es braucht bei der Progammerstellung keine Rücksicht darauf genommen werden, ob das Programm für ein System mit preemptiver oder kooperativer Umschaltstrategie entwickelt wird oder ob das Programm als Interrupt-Routine oder für die normale Abarbeitung vorgesehen ist. Weiter wird auch der Test des entwickelten Programms bei Einsatz des erfindungsgemäßen Verfahrens wesentlich vereinfacht. Es ist nämlich nicht mehr notwendig, an jeder Befehlsgrenze im Programm mögliche Änderungen der Eingangsgrößen zu berücksichtigen, vielmehr ist es ausreichend, die Eingangsgrößen zu Beginn der Abarbeitung einmal auszuwählen.

Auch die Aussagekraft der Funktionssimulation von quasi-parallelen Aufgabenprogrammen bei der Softwareentwicklung wird durch das erfindungsgemäße Verfahren wesentlich erhöht. Da die Funktionssimulation immer sequentiell erfolgt, hat sie für ein System mit unterbrechender Umschaltung (insbesondere preemptiver Umschaltstrategie) zwischen den Aufgabenprogrammen nur eine geringe Aussagekraft. Das Simulationsprogramm unterscheidet sich nämlich in seiner Implementierung vom endgültigen Programm und zeigt daher bei unterbrechender Umschaltung auch ein anderes Verhalten als das endgültige Programm. Durch den Einsatz des erfindungsgemäßen Verfahrens verhalten sich die Programme jedoch trotz unterbrechender Umschaltung so, als würden sie sequentiell ablaufen. Damit kann übereinstimmendes Verhalten zwischen Simulation und Realität erzielt werden.

Durch die in den Unteransprüchen aufgeführten Maßnahmen sind vorteilhafte Weiterbildungen und Verbesserungen des im Hauptanspruch angegebenen Verfahrens möglich. So ist es vorteilhaft, daß die Übernahme des Eintrags von der globalen Kopie einer Variablen in eine lokale Kopie einer Variablen durch einen nicht unterbrechbaren einzelnen Mikrorechner-Befehl oder durch eine nicht unterbrechbare Folge von Mikrorechner-Befehlen ausgeführt wird. Dadurch wird die Datenkonsistenz auch für den Fall gewährleistet, daß ausgerechnet in dem Moment, in dem ein Aufgabenprogramm seine lokale Kopie der globalen Variablen aktualisiert, eine Unterbrechung durch ein anderes Aufgabenprogramm geschieht, das während seiner Abarbeitung den Eintrag in der globalen Kopie verändert.

Die Maßnahmen gemäß Anspruch 3 gewährleisten die Datenkonsistenz auch für den Fall, daß ein Aufgabenprogramm die globale Variable neu erfaßt, bzw. berechnet und dann eine Aktualisierung der globalen Variabeln vornimmt.

### Zeichnung

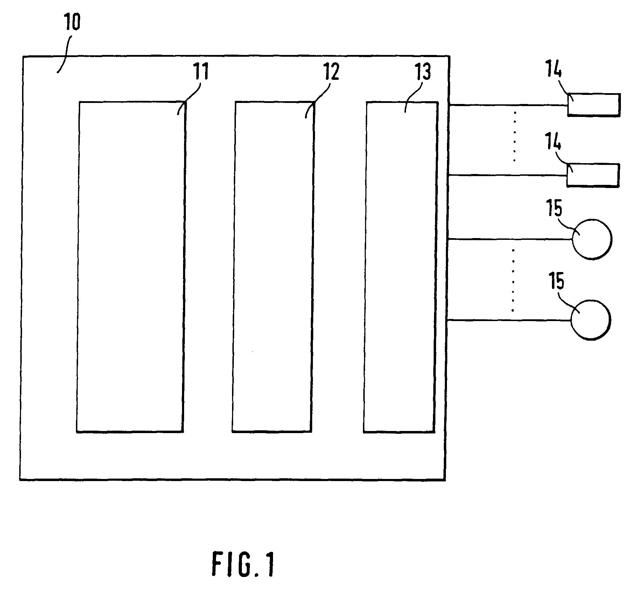

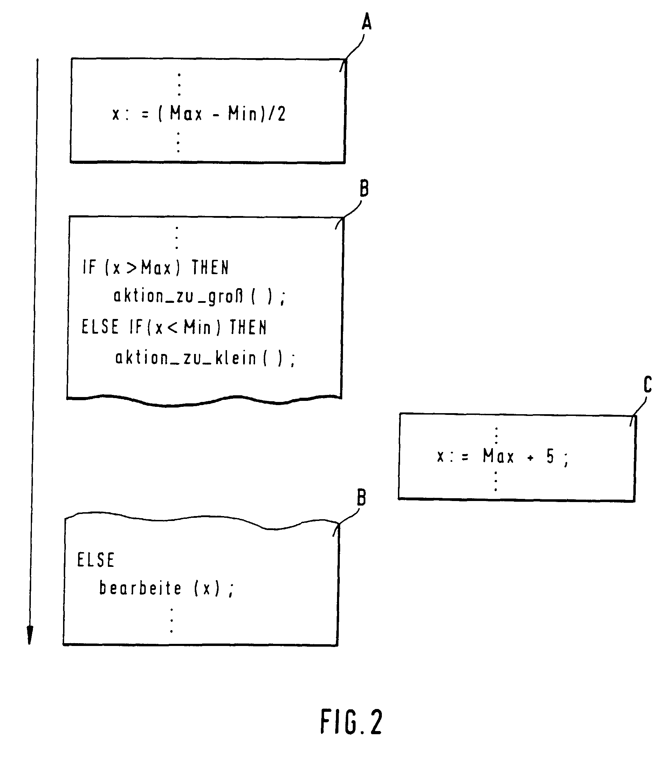

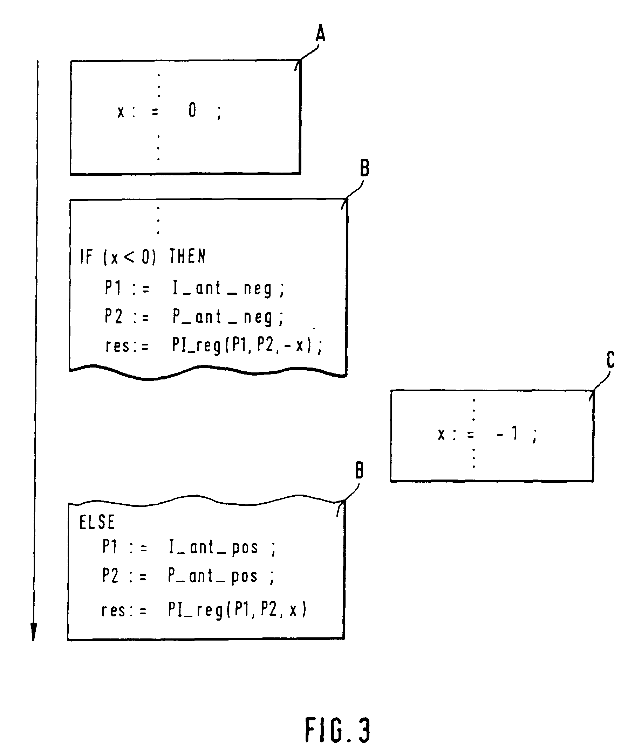

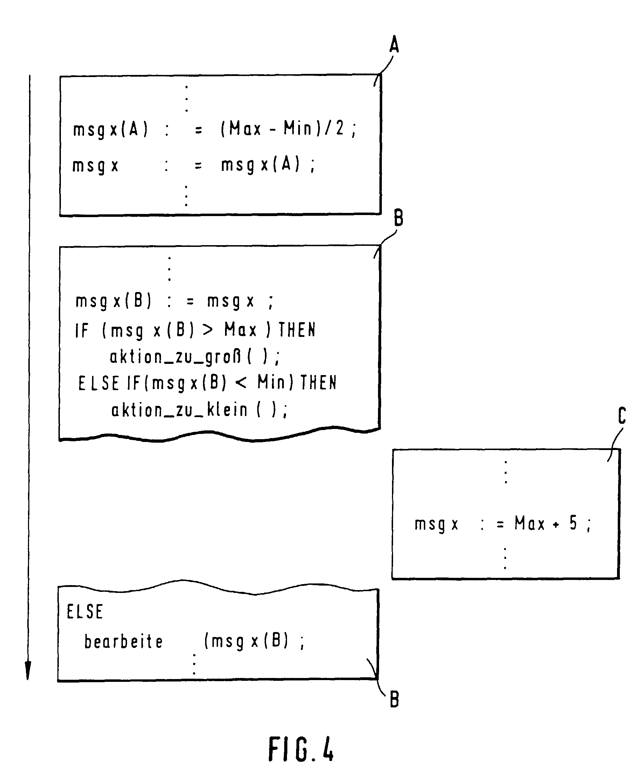

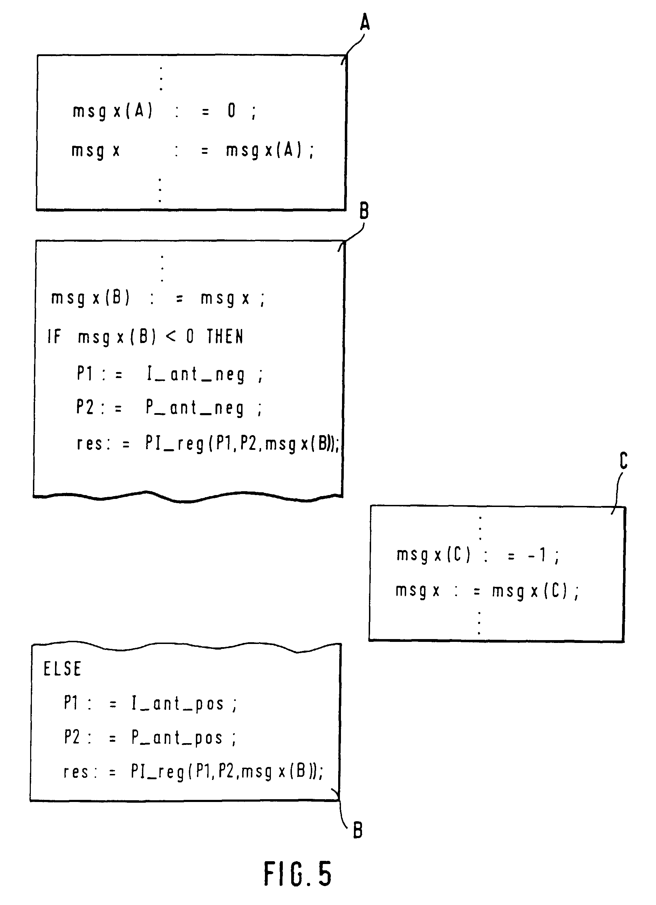

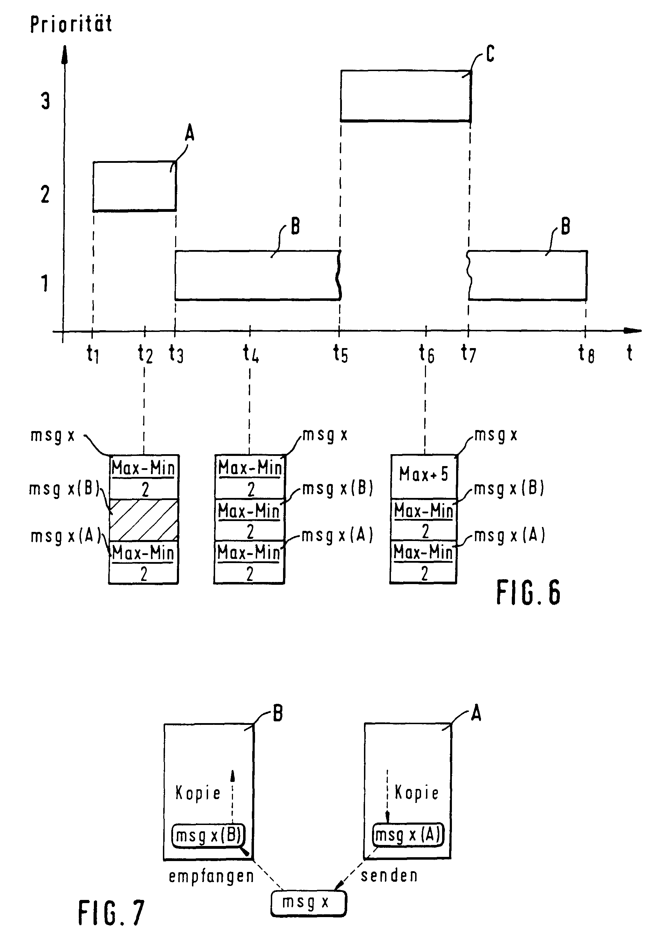

Ein Ausführungsbeispiel der Erfindung ist in der Zeichnung dargestellt und in der nachfolgenden Beschreibung näher erläutert. Es zeigen Figur 1 ein grobes Blockschaltbild eines Steuergerätes; Figur 2 ein erstes Beispiel für einen Programmablauf, bei dem Datenkonsistenz nicht gegeben ist; Figur 3 ein zweites Beispiel für einen Programmablauf, bei dem Datenkonsistenz nicht gegeben ist; Figur 4 den Programmablauf gemäß des ersten Beispiels, wobei in diesem Fall Datenkonsistenz gewährleistet ist; Figur 5 einen Programmablauf gemäß des zweiten Beispiels, wobei in diesem Fall ebenfalls die Datenkonsistenz gewährleistet ist; Figur 6 eine schematische Darstellung des erfindungsgemäßen Programmablaufs gemäß Figur 4 und Figur 7 eine schematische Darstellung für den erfindungsgemäßen Datenaustausch zwischen zwei Aufgabenprogrammen.

### Beschreibung der Erfindung

In der Figur 1 bezeichnet die Bezugszahl 10 ein beliebiges elektronisches Steuergerät für die Steuerung eines technischen Vorgangs oder Prozesses. Die Erfindung soll vorwiegend auf dem Gebiet der Kraftfahrzeug-Steuergeräte, wie Motor-Steuergeräte, Getriebe-Steuergeräte, Brems-Steuergeräte, Klima-Steuergeräte, usw. eingesetzt werden. Sie ist aber nicht auf dieses Einsatzgebiet beschränkt und kann vielmehr auch bei beliebigen elektronischen Steuergeräten zur Steuerung von komplexen Steuervorgängen, chemischen Prozessen, Werkzeugmaschinen-Steuerungen, Waschmaschinen-Steuerungen, usw. eingesetzt werden. Mit der Bezugszahl 11 ist der Mikrorechner des Steuergerätes 10 bezeichnet. Die Bezugszahl 12 verweist auf die Speicheranordnung des Steuergerätes 10. Die Speicheranordnung 12 besteht z.B. aus einem Schreib-/Lese-Speicher (RAM) sowie einem Festwertspeicher (EPROM). Mit der Bezugszahl 13 ist eine Ein-/Ausgabeeinheit des Steuergeräts 10 bezeichnet. In ihr sind sämtliche Schaltungen zur Meßwerterfassung sowie zur Ansteuerung bestimmter Ausgänge enthalten. In der Ein-/Ausgabeeinheit kann insbesondere ein Analog/Digitalwandler sowie eine Interrupt-Logik enthalten sein. An das Steuergerät 10 sind Sensoren 14 und Aktuatoren 15 angeschlossen. Der konkrete Aufbau eines derartigen Steuergerätes ist dem einschlägigen Fachmann aus dem Stand der Technik hinlänglich bekannt, so daß hierauf im folgenden nicht näher eingegangen wird. Nachfolgend wird anhand der Figuren 2 und 3 die Problematik der Dateninkonsistenz bei der Abarbeitung mehrerer Aufgabenprogramme, die sich preemptiv unterbrechen dürfen, verdeutlicht.

In Figur 2 ist ein Ausschnitt eines Programmablaufs des Steuergeräts 10 dargestellt. Mit der Bezugsziffer A ist ein erstes Aufgabenprogramm bezeichnet. Bezugsziffer B bezeichnet ein zweites Aufgabenprogramm. Die Bezugsziffer C bezeichnet ein drittes Aufgabenprogramm. Die Aufgabenprogramme A, B, C werden gesteuert durch ein Betriebssystem zur Abarbeitung gebracht. Dabei ist die Reihenfolge der Abarbeitung durchaus nicht immer gleich. Das Aufgabenprogramm A kann z.B. in einem bestimmten Zeitraster aufgerufen werden. Das Aufgabenprogramm A kann z.B. in einem anderen Zeitraster aufgerufen werden als das Aufgabenprogramm B. Das Aufgabenprogramm C kann als Interrupt-Programm ausgebildet sein, so daß es nur nach einer Interrupt-Anforderung zur Abarbeitung gelangt. Die Reihenfolge der Abarbeitung der Aufgabenprogramme ist in Figur 2 durch einen Pfeil markiert. Zuerst wird das Aufgabenprogramm A abgearbeitet. Als besonders herausgestellter Programmschritt ist in dem Aufgabenprogramm A die Anweisung dargestellt, daß eine Variable X auf den Wert (Max-Min)/2 gesetzt wird. Die Variable X ist dabei eine globale Variable, auf die auch die Aufgabenprogramme B und C zugreifen können. Die globale Variable kann z.B. eine beliebige Meßgröße, wie z.B. Motordrehzahl, Motortemperatur, Drosselklappenwinkel, Ansaugluftmasse, etc. sein. Es kann sich aber auch um eine Rechengröße wie z.B. die Laufunruhe handeln. Nachdem das Aufgabenprogramm A abgearbeitet ist, wird Aufgabenprogramm B als nächstes abgearbeitet. Es erfolgt dann ggf. nach mehreren vorhergehenden Anweisungen die Anweisung, daß für den Fall, daß der aktuelle Wert der Variablen X größer ist als ein bestimmter Maximalwert Max die aktion_zu_groß() ausgeführt wird. Falls der Wert statt dessen kleiner als ein vorgegebener Minimalwert Min ist, soll statt dessen die akion_zu_klein() durchgeführt werden. Da die globale Variable zuvor in dem Aufgabenprogramm A auf den Wert (Max-Min)/2 gesetzt worden ist, wird keine der vorher erwähnten Bedingungen erfüllt sein und es könnte als nächstes die Aktion Bearbeite(x) durchgeführt werden. Es kommt jedoch nicht zu der Abarbeitung dieser Anweisung, weil zuvor das Aufgabenprogramm C die Abarbeitung des Aufgabenprogramms B unterbricht. In dem Aufgabenprogramm C wird ebenfalls die globale Variable x verändert. Sie wird auf den Wert Max+5 gesetzt. Nachdem das Aufgabenprogramm C dann beendet ist, wird das Aufgabenprogramm B an der unterbrochenen Stelle fortgesetzt und es wird die Anweisung Bearbeite(x) ausgeführt. Somit tritt der Fall ein, daß das Aufgabenprogramm B bei seiner Fortsetzung die Bearbeitungsfunktion mit einem ungültigen Eingangswert x aufnimmt. Dies wird in der Regel zu einem nicht gewünschten Steuer-/Regel-Verlauf führen. Insbesondere in der Kraftfahrzeugtechnik, z.B. bei der Motorsteuerung, bei der es auf optimale Abgaswerte und möglichst geringen Kraftstoffverbrauch ankommt, sind derartige Fehleinstellungen besonders schädlich.

In Figur 3 ist ein weiteres Beispiel für eine auftretende Dateninkonsistenz dargestellt. In diesem Fall wird in dem Aufgabenprogramm A die Anweisung gegeben, die globale Variable x auf den Wert Null zu setzen. Im Aufgabenprogramm B, das nachfolgend abgearbeitet wird, wird dann eine Fallunterscheidung gemacht, ob die Variable x einen Wert kleiner als Null aufweist oder ob sie als positiver Wert vorliegt. Es werden dann in Abhängigkeit vom Vorzeichen unterschiedliche Bearbeitungsschritte durchgeführt. Da in dem vorhergehenden Aufgabenprogramm A die Variable x auf den Wert Null gesetzt wurde, müßte der Abarbeitungszweig für positives Vorzeichen der if-then-else-Anweisung ausgeführt werden. Es kommt jedoch nicht zu der direkten Abarbeitung des else-Zweiges, weil das Aufgabenprogramm C das Aufgabenprogramm B unterbricht. In dem Aufgabenprogramm C wird jedoch die Variabale x auf den Wert -1 gesetzt. Es wird dann bei der nachfolgenden Abarbeitung des else-Zeiges des Aufgabenprogramms B, also der Zweig für positives Vorzeichen von x ausgeführt, obwohl der x-Wert inzwischen negatives Vorzeichen aufweist. Es liegt also auch hier eine Dateninkonsistenz für das Aufgabenprogramm B vor.

Als drittes Beispiel für das Auftreten einer Dateninkonsistenz wird die Lese-/Schreib-Operation auf eine Eingangsgröße genannt, die nicht mit einer einzelnen Lese-/Schreib-Operation abgeschlossen ist. Beispielsweise bei Mikrorechnern, die nur 16 Bit-breite Speicherworte verarbeiten können, muß ein Zugriff auf einen 32 Bit-breites Wort durch zwei Leseoperationen durchgeführt werden. Wird das Programm zwischen diesen beiden Operationen unterbrochen und das 32 Bit-breite Wort neu beschrieben, dann gehören der höherwertige 16 Bit-breite Teil und der niederwertige 16 Bit-breite Teil zu einem jeweils unterschiedlichen Wert. Die resultierende 32 Bit-breite Eingangsgröße ist inkonsistent und somit fehlerhaft.

Das Problem der Dateninkonsistenz ist dadurch erschwert, daß bei einem komplexen Steuerprogramm eine Vielzahl von potentiell möglichen Ablaufreihenfolgen und Unterbrechungsstellen existieren, da das Programm potentiell nach jeder einzelnen Instruktion unterbrochen werden kann. Für einen Test eines solchen Steuerprogramms ist es nahezu unmöglich, alle möglichen Kombinationen von Ablauf reihenfolgen und Unterbrechungsstellen zu durchlaufen und jeweils sicherzustellen, daß das Programm unter allen Bedingungen korrekt arbeitet.

Die Erfindung setzt es sich zum Ziel, durch geeignete Maßnahmen die Datenkonsistenz in einem derartigen komplexen Steuerprogramm zu garantieren.

Erfindungsgemäß werden für alle globalen Variablen, die Eingangsgrößen für ein oder mehr Aufgabenprogramme sind und die während des Programmablaufs durch ein anderes Aufgabenprogramm geändert werden können, lokale Kopien angelegt. Das entsprechende Aufgabenprogramm greift dann in der weiteren Folge jeweils auf die lokale Kopie der globalen Variablen zu. Es ist dabei vorausgesetzt, daß nur ein Aufgabenprogramm auf seine eigene lokale Kopie zugreifen kann. Unter diesen Bedingungen wird die Datenkonsistenz für das jeweilige Aufgabenprogramm sichergestellt. Es werden also zusätzlich zu der globalen Kopie einer Eingangsgröße oder globalen Variablen lokale Kopien für bestimmte Aufgabenprogramme angelegt. Nutzt ein Aufgabenprogramm die Eingangsgröße, so wird der Wert der Eingangsgröße zu Beginn oder zu einem anderen gewünschten Zeitpunkt in einer nicht unterbrechbaren Schreiboperation von der globalen Kopie gelesen und in die entsprechende lokale Kopie des jeweiligen Aufgabenprogramms umkopiert. Ein Aufgabenprogramm, das nicht nur lesend auf die Eingangsgröße zugreift, sondern die Eingangsgröße selber erfaßt oder aus anderen Größen berechnet, kann auf die globale Variable, d.h. auf die globale Kopie auch schreibend zugreifen. Auch diese Schreiboperation sollte dann in einem Block stattfinden, der nicht durch irgendein anderes Aufgabenprogramm unterbrochen werden kann. Dies wird z.B. dadurch erreicht, daß vor der erwähnten Schreiboperation sämtliche Interrupt-Anforderungen gesperrt werden, so daß ein Interrupt-Programm keine Unterbrechung durchführen kann. Nach der Schreiboperation können dann die Interrupt-Anforderungen wieder freigegeben werden. Das Verfahren wird nachfolgend anhand der Figuren 4 und 5 genauer erläutert.

Die Figur 4 enthält den gleichen beispielhaften Programmablauf wie die Figur 2. Bei Abarbeitung des Aufgabenprogramms A wird jedoch an der entsprechenden Stelle zuerst die lokale Kopie msgx(A) auf den Wert (Max-Min)/2 gesetzt. Erst danach wird in einer einzigen, nicht unterbrechbaren Schreiboperation der Eintrag von der lokalen Kopie msgx(A) in die globale Kopie msgx übernommen. Diese Schreiboperation besteht letztlich aus einem einzigen Mikrorechnerbefehl, der nicht mehr unterbrochen werden kann. Deshalb brauchen hier vor der Schreiboperation keine Interrupt-Anforderungen gesperrt zu werden. Bei dem nachfolgenden Ablauf des Aufgabenprogramms B wird vor der fehleranfälligen if-then-else-Anweisung zuerst der Eintrag in der globalen Kopie msgx in die lokale Kopie msgx(B) des Aufgabenprogramms B für die globale Variable x übernommen. Auch diese Operation ist eine nicht unterbrechbare Schreiboperation. Im folgenden wird in dem Aufgabenprogramm B nur noch mit der lokalen Kopie msgx(B) gearbeitet. Dadurch kann eine Dateninkonsistenz garnicht auftreten, auch dann nicht, wenn das Aufgabenprogramm C während seiner Abarbeitung die globale Kopie msgx neu beschreibt. Auf die lokale Kopie msgx(B) hat das Aufgabenprogramm C nämlich keinen Zugriff.

Gemäß Figur 5 beschreibt das Aufgabenprogramm A während seiner Abarbeitung die lokale Kopie msgx(A) mit dem Wert Null. Anschließend erfolgt wieder ein Schreibvorgang des Wertes der lokalen Kopien msgx(A) in die globale Kopie msgx. Der Schreibvorgang geschieht wiederum nicht unterbrechbar, wie bei der Beschreibung der Figur 4 erläutert. Wenn das Aufgabenprogramm B abgearbeitet wird, wird wiederum vor der kritischen if-then-else-Anweisung der Wert in der globalen Kopie msgx in die lokale Kopie msgx(B) übernommen. Es wird dann während der weiteren Abarbeitung des Aufgabenprogramms B nur mit der lokalen Kopie msgx(B) gearbeitet. Auch eine Unterbrechung durch das Aufgabenprogramm C, bei dessen Abarbeitung die globale Variable msgx neu beschrieben wird, führt nicht zu einer Dateninkonsistenz.

In Figur 6 ist der Progammablauf gemäß der Figur 4 nochmals in anderer Form dargestellt. Zum Zeitpunkt t₁ wird die Abarbeitung des Aufgabenprogramms A begonnen. Zum Zeitpunkt t₂ ist sowohl in der lokalen Kopie msgx(A) und msgx der Wert (Max-Min)/2 eingetragen. In die lokale Kopie msgx(B) für das Aufgabenprogramm B kann ein beliebiger Wert eingetragen sein, was durch die Schraffur angedeutet ist. Zum Zeitpunkt t₃ ist das Aufgabenprogramm A beendet. Anschließend wird sofort mit der Abarbeitung des Aufgabenprogramms B begonnen. Zum Zeitpunkt t₄ hat auch das Aufgabenprogramm B den Wert aus der globalen Kopie msgx in seine lokale Kopie msgx(B) übernommen. Zum Zeitpunkt t₅ unterbricht das Aufgabenprogramm C die Abarbeitung des Aufgabenprogramms B. Das Aufgabenprogramm C besitzt in dem hier betrachteten Beispiel die höchste Priorität, wie an der Ordinate des Koordinatenkreuzes ersichtlich ist. Das Aufgabenprogramm C kann selber nicht mehr unterbrochen werden, deshalb ist für das Aufgabenprogramm C keine lokale Kopie für die Variable x mehr vorgesehen. Zum Zeitpunkt t₆ hat das Aufgabenprogramm C den Wert der globalen Kopie msgx mit dem neuen Wert Max+5 überschrieben. Zum Zeitpunkt t₇ ist die Abarbeitung des Aufgabenprogramms C beendet. Anschließend wird das unterbrochene Aufgabenprogramm B an der Unterbrechungsstelle fortgesetzt. Zum Zeitpunkt t₈ ist auch die Abarbeitung des Aufgabenprogramms B beendet. Zwischen den Zeitpunkten t₆ und t₈ werden die Einträge in die lokalen Kopien und die globale Kopie für die Variable x nicht mehr verändert.

In der Figur 7 ist mit dem Bezugszeichen A ein Aufgabenprogramm bezeichnet, während dessen Abarbeitung die Eingangsgröße x neu ermittelt wird. Die neu ermittelte Eingangsgröße wird dann von dem Aufgabenprogramm A zuerst in seiner lokalen Kopie msgx(A) abgelegt. Anschließend wird der Wert auch in die globale Kopie msgx kopiert. Dieser Kopiervorgang wird auch als Sendevorgang bezeichnet. Bei der nachfolgenden Abarbeitung des Aufgabenprogramms B übernimmt dieses Aufgabenprogramm den Eintrag in der globalen Kopie msgx in seine lokale Kopie msgx(B) . Dieser Kopiervorgang wird auch als Empfangsvorgang bezeichnet.

Je nachdem, wieviele Aufgabenprogramme in dem komplexen Steuerprogramm enthalten sind, welche Eingangsgrößen von den jeweiligen Aufgabenprogrammen verarbeitet werden, welche Aufgabenprogramme wiederum andere unterbrechen können und welche wiederum nicht mehr unterbrochen werden können, bestehen verschiedene Möglichkeiten zur Optimierung des Speicher- wie auch des Laufzeitbedarfs des komplexen Steuerprogramms. Dabei sind insbesondere folgende Kriterien zu beachten: Es sind nur dann lokale Kopien anzulegen, wenn ein Programm A ein anderes Programm B unterbrechen kann und beide Programme Zugriff auf die gleiche Variable haben. In allen anderen Fällen (z.B. bei kooperativem Umschalten zwischen anderen Programmen) sind keine lokalen Kopien notwendig, da der Zugriff auf die Variable dann wie auf eine globale Variable erfolgt.

Unterbricht Programm A Programm B und ist Programm A Empfänger der Daten aus der globalen Kopie und Programm B Sender der Daten in die globale Kopie und wird zusätzlich der Sende- und Empfangsvorgang mit nicht unterbrechbaren Operationen durchgeführt, so brauchen ebenfalls keine lokalen Kopien angelegt zu werden. Da der Sender den Empfänger nicht unterbrechen kann, ist Datenkonsistenz gewährleistet.

Unterbricht Programm A Programm B und ist Programm A der Sender der neu ermittelten Daten und ist Programm B Empfänger der neu ermittelten Daten, und wird der Sende- und Empfangsvorgang mit nicht unterbrechbaren Operationen durchgeführt, so benötigt Programm A keine lokale Kopie. Die Schreiboperationen des Programms A folgen nicht unterbrechbar und somit kann Aufgabenprogramm B immer auf konsistente Daten zugreifen.

Werden die Aufgabenprogramme A bis N durch ein Aufgabenprogramm S unterbrochen, wobei sich die Aufgabenprogramme A bis N gegenseitig nicht unterbrechen können und das Aufgabenprogramm S gemäß Figur 7 Sender der Daten ist und die Aufgabenprogramme A bis N Sender oder Empfänger sind, so können die Aufgabenprogramme A bis N dieselbe lokale Kopie verwenden. Da die Aufgabenprogramme A bis N sequentiell ablaufen, können sie den gleichen Speicherplatz für die lokale Kopie verwenden.

Bei allen oben genannten Optimierungsmöglichkeiten bleibt die Datenkonsistenz gesichert. Es ist daher sinnvoll, den Mechanismus für den Datenaustausch zwischen zwei Aufgabenprogrammen in einem Betriebssystem zu integrieren, das abhängig von den Gegebenheit die jeweils laufzeit- und speicheroptimale Implementierung für Sende- und Empfangsvorgänge wählt. Das Betriebssystem kann dann entscheiden, ob ein Sende- oder Empfangsaufruf eine Kopieraktion in eine lokale Kopie zur Folge hat oder ob keine Kopieraktion ausgeführt werden muß. Ebenso kann das Betriebssystem entscheiden, ob der Zugriff auf die Variable direkt über die globale Kopie erfolgen kann oder ob der Zugriff über die lokale Kopie des Aufgabenprogramms erfolgen muß.

In den beschriebenen Beispielen sind den Aufgabenprogrammen A,B,C feste Prioritäten zugeordnet. Die Dringlichkeit der Abarbeitung von Aufgabenprogrammen kann jedoch auch von einem Betriebssystem jeweils nach Aktivierung eines Aufgabenprogramm neu berechnet werden. Dazu kann z.B. jedem Aufgabenprogramm eine Zeit zugeordnet werden, innerhalb derer das Aufgabenprogramm abgearbeitet sein muß. Dann kann es bei Aktivierung des Aufgabenprogramms vorkommen, daß das Betriebssystem die Abarbeitung des schon begonnenen Aufgabenprogramms fortführt oder daß es das begonnene Aufgabenprogramm unterbricht und das neu aktivierte Aufgabenprogramm abarbeitet. Je nachdem welches der aktivierten Aufgabenprogramme eher abgearbeitet sein muß, wird vom Betriebssystem dann ausgewählt. Die Dringlichkeit eines Aufgabenprogramms wächst also in diesen Fällen mit der Zeit, in der es auf seine Abarbeitung wartet, an.

## Patentansprüche

1. Verfahren zur Steuerung von technischen Vorgängen oder Prozessen, insbesondere im Kraftfahrzeug, wobei ein komplexes Steuerprogramm von einem Mikrorechner (11) eines Steuergerätes abgearbeitet wird, wobei das komplexe Steuerprogramm in eine Anzahl von Aufgabenprogrammen (A, B, C) eingeteilt ist, wobei einem Aufgabenprogramm eine Dringlichkeit, insbesondere eine feste Priorität, und mindestens ein Aktivierungsereignis zugeordnet ist, wobei jeweils das aktivierte Aufgabenprogramm mit der höchsten Dringlichkeit für die Abarbeitung ausgewählt wird, wobei die Abarbeitung eines Aufgabenprogramms aufgrund einer späteren Anforderung der Abarbeitung eines noch dringlicheren Aufgabenprogramms unterbrochen wird und die Abarbeitung des unterbrochenen Aufgabenprogramms nach Beendigung der Abarbeitung des dringlicheren Aufgabenprogramms fortgesetzt wird, dadurch gekennzeichnet, daß mindestens für eine Variable (x) des komplexen Steuerprogramms, auf die von mindestens zwei Aufgabenprogrammen ((A,B), (A,C), (B,C)) während ihrer Abarbeitung zugegriffen wird, außer einer globalen Kopie (msgx) auch jeweils lokale Kopien (msgx(A) msgx(B) msgx(C)), für mindestens diejenigen Aufgabenprogramme (A, B) vorgesehen werden, die durch ein dringlicheres Aufgabenprogramm (C) unterbrechbar sind, welches auf die Variable (x) schreibend zugreifen kann, daß diese Aufgabenprogramme (A, B) bei ihrer Abarbeitung, insbesondere zu Beginn ihrer Abarbeitung, den Eintrag der globalen Kopie (msgx) für die Variable (x) in ihre lokale Kopie (msgx(A), msgx(B)) übernehmen und anschließend, insbesondere für den Rest ihrer Abarbeitungszeit, auf ihre lokale Kopie (msgx(A), msgx(B)) der Variablen (x) zugreifen.

2. Verfahren nach Anspruch 1, dadurch gekennzeichnet, daß die Übernahme des Eintrages in der globalen Kopie (msgx) durch einen nicht unterbrechbaren einzelnen Mikrorechner-Befehl oder durch eine nicht unterbrechbare Folge von Mikrorechner-Befehlen ausgeführt wird.

3. Verfahren nach Anspruch 1 oder 2, dadurch gekennzeichnet, daß der schreibende Zugriff eines Aufgabenprogramms (A, C) auf die globale Kopie (msgx) der Variablen (x) durch einen nicht unterbrechbaren einzelnen Mikrorechner-Befehl oder durch eine nicht unterbrechbare Folge von Mikrorechner-Befehlen ausgeführt wird.

4. Verfahren nach Anspruch 2 oder 3, dadurch gekennzeichnet, daß vor der Abarbeitung der nicht unterbrechbaren Folge von Mikrorechner-Befehlen bestimmte Interrupt-Anforderungen gesperrt werden.

5. Verfahren nach Anspruch 4, dadurch gekennzeichnet, daß die bestimmten Interrupt-Anforderungen mindestens solche Interrupt-Anforderungen betreffen, die zur Aktivierung von Interrupt-Bearbeitungsprogrammen führen, während deren Abarbeitung auf die Variable (x) schreibend zugegriffen wird.

## Claims

1. Method of controlling technical operations or processes, in particular in a motor vehicle, a complex control program being executed by a microcomputer (11) of a controller, the complex control program being divided into a number of task programs (A, B, C), a task program being assigned an urgency, in particular a fixed priority, and at least one activation event, the activated program having the greatest urgency in each case being selected for execution, the execution of a task program being interrupted by a subsequent request to execute a still more urgent task program, and the execution of the interrupted task program being continued after the execution of the more urgent task program has been completed, characterized in that, at least for one variable (x), which belongs to the complex control program and to which access is made by at least two task programs ((A, B), (A, C), (B, C)) during their execution, in addition to a global copy (msgx), local copies (msgx(A), msgx (B), msgx(C)) are also provided in each case for at least those task programs (A, B) which can be interrupted by a more urgent task program (C), which can make write access to the variable (x), in that these task programs (A, B), during their execution, in particular at the beginning of their execution, take over the entry of the global copy (msgx) for the variable (x) into their local copy (msgx(A), msgx(B)) and subsequently, in particular for the rest of their execution time, make access to their local copy (msgx(A), msgx(B)) of the variable (x).

2. Method according to Claim 1, characterized in that the entry is taken over in the global copy (msgx) means of an uninterruptable individual microcomputer command or by means of an uninterruptable sequence of microcomputer commands.

3. Method according to Claim 1 or 2, characterized in that the write access of a task program (A, C) to the global copy (msgx) of the variable (x) is implemented by means of an uninterruptable individual microcomputer command or by means of an uninterruptable sequence of microcomputer commands.

4. Method according to Claim 2 or 3, characterized in that, before the execution of the uninterruptable sequence of microcomputer commands, specific interrupt requests are blocked.

5. Method according to Claim 4, characterized in that the specific interrupt requests relate at least to those interrupt requests which lead to the activation of interrupt-processing programs during whose execution a write access is made to the variable (x).

## Revendications

1. Procédé de commande d'opérations ou procédé de techniques notamment dans un véhicule automobile, selon lequel un microcalculateur (11) d'un appareil de commande traite un programme de commande complexe, ce programme de commande complexe pouvant être réparti en un certain nombre de programmes de tâches (A, B, C), un programme de tâches ayant une urgence, notamment une priorité fixe, et au moins un élément d'activation, et chaque fois le programme de tâches activé étant sélectionné avec l'urgence la plus élevée pour le traitement, le traitement d'un programme de tâches étant interrompu par une demande ultérieure de traitement d'un programme de tâches encore plus urgent et le traitement du programme de tâches, interrompu, se poursuivant à la fin du traitement du programme de tâches plus urgent,
caractérisé en ce qu'
au moins pour une variable (x) du programme de commande complexe, à laquelle accèdent au moins deux programmes de tâches ((A, B) (A, C) (B, C)) pendant son traitement, on prévoit en plus d'une copie globale (msgx), également chaque fois des copies locales (msgx(A) msgx(B) msgx(C) pour au moins ceux des programmes de tâches (A, B) qui peuvent être interrompus par un programme de tâches (C) plus urgent, et qui peut accéder en écriture à la variable (x), ces programmes de tâches (A, B) pouvant assurer lors de leur traitement, notamment au début de leur traitement, l'enregistrement de la copie globale (msgx) pour la variable (x) dans leur copie locale (msgx(A), msgx(B)) puis, notamment pour le reste de leur temps de travail, accéder à leur copie locale (msgx(A), msgx(B)) de la variable (x).

2. Procédé selon la revendication 1,
caractérisé en ce que
le transfert de l'enregistrement dans la copie globale (msgx) est assuré par un ordre de microcalculateur, séparément non interruptible, ou par une suite non interruptible d'ordres de microcalculateur.

3. Procédé selon l'une des revendications 1 ou 2,
caractérisé en ce que
l'accès en écriture d'un programme de tâches (A, C) à la copie globale (msgx) de la variable (x), est effectué par un seul ordre de microcalculateur non interruptible ou par une suite non interruptible d'ordres de microcalculateur.

4. Procédé selon la revendication 2 ou 3,
caractérisé en ce qu'
avant le traitement de la suite non interruptible d'ordres de microcalculateur, on bloque certaines demandes d'interruption.

5. Procédé selon la revendication 4,
caractérisé en ce que
les demandes d'interruption déterminées concernent au moins des demandes d'interruption conduisant à l'activation de programmes de traitement d'interruption avec l'accès en écriture sur la variable (x) pendant leur traitement.
